# EUROPEAN PATENT APPLICATION

(11) **EP 2 610 712 A1**
(43) Date of publication of application: **03.07.2013**
(21) Application number: 10856275.2
(22) Date of filing: 30.09.2010
(51) Int. Cl.: G06F 3/02

(54) **NOVEL FOLDING KEYBOARD STRUCTURE**

(30) Priority: 26.08.2010 CN 201020505241 U
(71) Applicant: Jiaxing Shunon Electronics Technology Co., Ltd., Zhejiang Province 314003 (CN)
(72) Inventor: YANG, Xinchuan, Zhejiang 314003 (CN)
(74) Representative: Intès, Didier Gérard André
(86) International application number: PCT/CN2010/001495
(87) International publication number: WO 2012/024822

(57) **Abstract**

A novel folding keyboard structure has a keyboard (1) which is divided into two parts A (2) and B (3) that are hinged together, and includes a protective housing (4), on the inside edge of which a slide groove (5) is set. The keyboard (1) is embedded into the slide groove (5), the size of the protective housing (4) is slightly larger than that of the part B (3), the area of the part B is not less than that of the part A (2). The full size keyboard is formed after A (2) and B (3) are unfolded and suitably slides within the protective housing (4). The keyboard (1) is fixed in the protective housing (4) by mating a stop pin groove (6) of the protective housing (4) with a stop pin set on the back of the keyboard (1) when the keyboard (1) slides to a fixed point. A protective sliding cover (12) is formed by hinging a sliding cover (13) and a fixed cover (14). The fixed cover (14) is connected with the bottom surface of the part B (3) of the keyboard (1). The sliding cover (13) is embedded into a groove (21) in the exterior side of the part A (2) of the keyboard (1). A small groove (20) is set within the groove (21), an elastic spring is set on the groove bottom of the small groove (20), and a baffle (19) on the top of the sliding cover (13) is set within the small groove (20). Using the keyboard structure, the full character keyboard having standard keycaps can be folded, and the keyboard can be fixed after unfolded, can be used when placed on a table or legs, and is easy to use.

## Description

### Technical Field

The utility model specifically relates to a keyboard structure, and particularly to a novel folding keyboard structure.

### Background Art

Currently, the touch technology is increasingly mature and widely used in mobile portable electronic devices. But in the man-machine interface, most people are still accustomed to using the conventional keyboard. The conventional standard keyboard is too large and heavy relative to the existing electronic devices, thereby being inconvenient for carriage and usage.

Although in the market, the full character keyboards with reduced size are available to be used in the smart phones, the operation is very unreasonable and inconvenient because the keys are too small. There are also some foldable keyboards, but they all have problems, e.g., the keys do not meet the size requirement, the unfolded keyboard cannot be fixed and shall only be used on a table, or the keyboard is too thick to be carried.

### Summary of the Invention

The utility model provides a novel folding keyboard structure. The object of the utility model is to solve the existing technical problem, and provide a full character foldable keyboard having standard keycaps, which can be fixed integrally and used on the lap after being unfolded.

The utility model adopts the following technical solutions to solve the problem:
A novel folding keyboard structure, which has a keyboard, wherein the keyboard is divided into two parts A and B hinged to each other; the novel folding keyboard structure further comprises a protective housing having an inner side thereof being provided with a slide groove, and a side of the keyboard being provided with a keyboard slide groove matched with the slide groove in which the keyboard is embedded; the protective housing has a size slightly larger than part B, and part B has an area not less than part A; a full size keyboard is formed by unfolding parts A and B and is slidable appropriately in the protective housing; when sliding to a fixed point, the keyboard is fixed in the protective housing by means of the matching between a stop pin groove of the protective housing and a stop pin provided on the back of the keyboard.

A bent side of part A of the keyboard is provided with a protective sliding cover composed of a sliding cover and a fixed cover hinged to each other, wherein the fixed cover is connected to an bottom surface of part B of the keyboard, and the width of the fixed cover is equal to a sum of the thicknesses of parts A and B of the keyboard; the sliding cover is embedded in a groove on the outer side of part A of the keyboard, and is slidable up and down along the groove; the groove is further provided with a small groove whose bottom is mounted with a elastic spring; the top of the sliding cover is provided with a baffle disposed in the small groove; and when the keyboard is in a folded state, the baffle abuts against the elastic spring and the elastic spring is in a compressed state.

The length of a keyboard slide groove on part A of the keyboard is less than that of the side of part A, and the keyboard slide groove is communicated with a keyboard slide groove of part B.

The protective housing is composed of an upper cover and a lower cover hinged to each other, the keyboard is disposed in the protective housing by being folded, and the outer side of the upper cover is provided with a support leg.

Both ends of the keyboard are provided with balance legs, respectively.

Parts A and B of the keyboard contain only thin film lines that connect keys, and the thin film lines are connected to a circuit board in the lower cover of the protective housing.

Beneficial effect of the utility model: the keyboard structure enables the full character keyboard having standard keycaps to be folded. When being unfolded, the keyboard can be fixed, and used not only on the table, but also on the lap, thereby bringing convenience to the user's operation. The keyboard of the structure adopts a thin-type keyboard, and the overall thickness of the folded keyboard is small, which facilitates the carriage.

### Brief Description of the Drawings

Fig. 1 is structure diagram 1 of the utility model;
Fig. 2 is a structure diagram of an unfolded keyboard;
Fig. 3 is an enlarged view of Part A in Fig. 2;
Fig. 4 is a structure diagram of the inside of a protective housing;
Fig. 5 is an enlarged view of Part C in Fig. 4;
Fig. 6 is a structure diagram of the back of a keyboard;
Fig. 7 is structure diagram 3 of the utility model;
Fig. 8 is structure diagram 4 of the utility model;
Fig. 9 is structure diagram 5 of the utility model;
Fig. 10 is a structure diagram of Part B in Fig. 9; and
Fig. 11 is a structure diagram of a keyboard.

### Detailed Description of the Preferred Embodiments

The utility model is further described as follows in conjunction with the drawings and the embodiments.

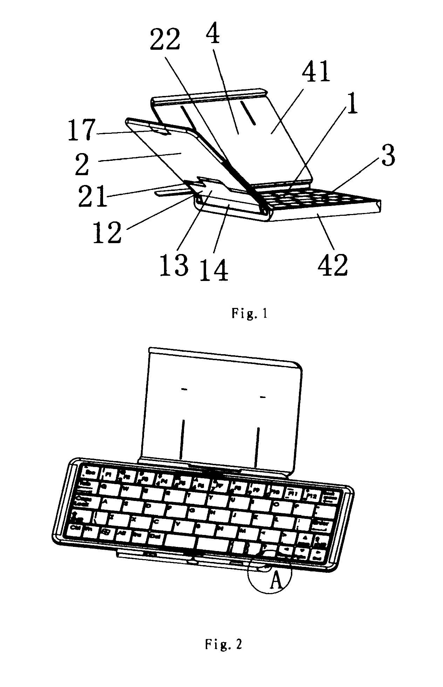

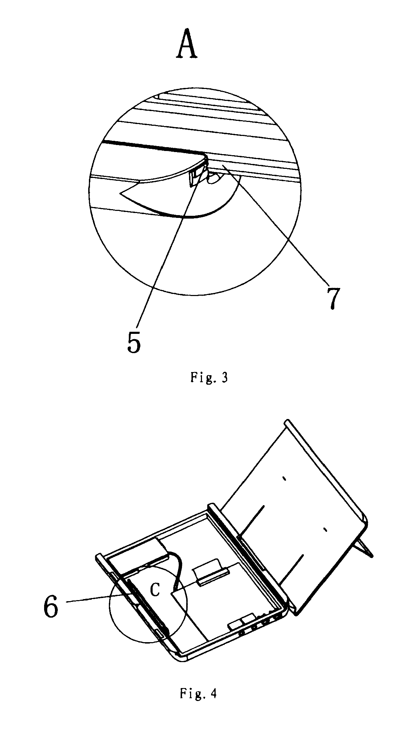

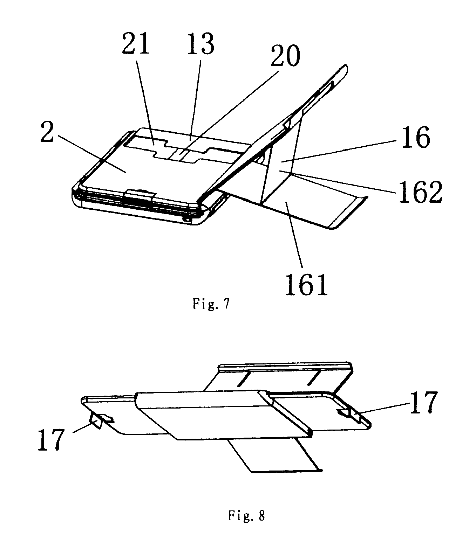

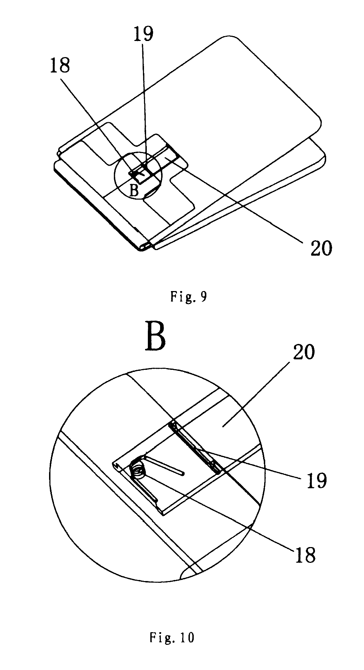

The novel folding keyboard structure as illustrated in Figs. 1 to 11 includes a keyboard 1, which is a twice-folded full character full size thin film keyboard having standard keycaps in this embodiment and divided into two parts A2 and B3 hinged to each other. The foldable keyboard structure further includes a protective housing 4 composed of an upper cover 41 and a lower cover 42 hinged to each other. An inner side of the lower cover 42 is provided with a slide groove 5, and a side of the keyboard 1 is provided with a keyboard slide groove 7 matched with the slide groove 5 in which the keyboard 1 is embedded. The slide groove 5 may be provided on one side or both sides of the lower cover 42, and the keyboard slide groove 7 is provided in correspondence with the slide groove 5. In this embodiment, in order that the keyboard 1 has a good sliding property, both sides of the lower cover 42 are provided with the slide groove 5, and both sides of the keyboard 1 are also provided with the keyboard slide groove 7, correspondingly. The protective housing 4 has a size slightly larger than part B3, and part B3 has an area not less than part A2. In this embodiment, for the convenience of production and installation, parts A2 and B3 have the same area. The inside of the protective housing 4 is provided with a stop pin groove 6, and the back of the keyboard 1 is provided with a stop pin matched with the stop pin groove 6. In this embodiment, a bent side of part A2 of the keyboard is further provided with a protective sliding cover 12 for the purpose of shielding and protecting the keycaps and inner electric parts exposed at the folded portion of the keyboard 1 when the keyboard 1 is folded, and improving the aesthetics of the appearance of the whole keyboard. When the keyboard is unfolded, the protective sliding cover 12 can slide to the folded position and serve as a support plate. The protective sliding cover 12 is composed of a sliding cover 13 and a fixed cover 14 hinged to each other, wherein the fixed cover 14 is connected to the bottom surface of part B3 of the keyboard, and the width of the fixed cover 14 is equal to a sum of the thicknesses of parts A2 and B3 of the keyboard. The sliding cover 13 is embedded in a groove 21 on an outer side of part A3 of the keyboard, and slidable up and down along the groove 21. The groove 21 is further provided with a small groove 20 whose bottom is mounted with a elastic spring 18. The top of the sliding cover 13 is provided with a baffle 19 disposed in the small groove 20. In addition, when the keyboard 1 is in the folded state, the baffle abuts against the elastic spring 18 and the elastic spring is in the compressed state.

The outer side of the upper cover 41 of the protective housing is provided with a support leg 16, which herein includes two support boards 161 and 162 hinged to each other, and the support board 161 is further hinged to the upper cover 41. The support leg 16 may have other appropriate structure, rather than being limited to the structure as mentioned in this embodiment.

When the keyboard 1 is unfolded, it is fixed at the intermediate portion by a sheath. There is a height difference between both sides of the keyboard and the intermediate portion. In order to ensure that the keyboard is flatly placed on the table, balance legs 17 are designed at both ends of the keyboard. The leg 17 can spring out when the bayonet is pressed while unfolding the keyboard, so as to ensure the flatness of the keyboard on the table. A loudspeaker may be embedded in the leg 17.

In this embodiment, part A2 of the keyboard may be foldable on one side and slidable, while part B3 only slides in the protective housing 1. The process of unfolding the keyboard is described as follows.

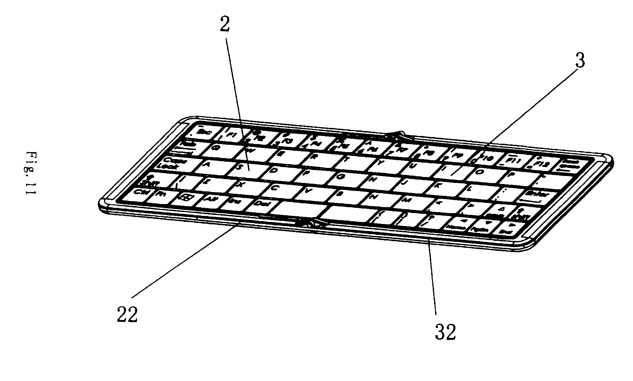

When the upper cover 41 is unfolded, the keyboard 1 is in the folded state, and the baffle 19 on the top of the protective sliding cover 12 abuts against the elastic spring 18 which is in the compressed state then. The restoring force of the elastic spring 18 slightly raises part A2 of the keyboard 1 to facilitate the unfolding thereof. During the unfolding, the sliding cover 13 of the protective sliding cover 12 slides upwards along the side of the groove 21 with the rotation of part A2, and the baffle 19 also slides upwards along the small groove 20 while driving the fixed cover 14 to rotate. After the unfolding, A2 and B3 are located on the same plane, while the sliding cover 13 and the fixed cover 14 are also located on the same plane and parallel to the keyboard 1. In that case, the protective sliding cover 12 serves as a support plate of the keyboard 1, and a positioning elastic sheet 11 on the back of the keyboard is disposed in the stop pin groove 6. Next, the keyboard 1 slides along the slide groove 5 in the lower cover 41 of the protective housing, with the protective sliding cover 12 sliding along with the slide of the keyboard 1. During the sliding process, when the keyboard 1 slides from the folded position to the intermediate portion of the protective housing 1, the positioning elastic sheet 11 slides to the end of the stop pin groove 6 and gets stuck by the end, thereby preventing the keyboard 1 from continuing sliding. Part B3 of the keyboard will not leave the protective housing 4 and will fix the keyboard 1 at the same time. Such a keyboard can be placed on the table and the unfolded keyboard 1 is as illustrated in Fig. 2. Meanwhile, in order to further control part B3 of the keyboard not to leave the protective housing 4, the length of a keyboard slide groove 22 on part A2 of the keyboard is less than that of the side of part A, and in this embodiment, the length of the keyboard slide groove 22 is only a half of that of the side of part A. The keyboard slide groove 22 is communicated with a keyboard slide groove 32 of part B3, as illustrated in Fig. 11. During the sliding of the keyboard 1 in the protective housing 4, when the bottom of the keyboard slide groove 22 of part A abuts against the top of the slide groove 5 of the protective housing, the keyboard 1 cannot continue sliding in the protective housing 4, thus part B3 of the keyboard will not leave the protective housing 4.

After the keyboard 1 is unfolded, the upper cover 41 of the sheath can flip backwards to serve as a holder where a tablet PC, an MID or a smart phone is placed. The height of the support leg 16 on the upper cover 41 may be controlled through the support board 162, thereby adjusting the viewing angle of the display.

When wanting to place the keyboard on the lap, the user may continue pressing the upper cover 41 of the protective housing backwards, so that the upper cover 41 of the protective housing overlaps with the lower cover 42.

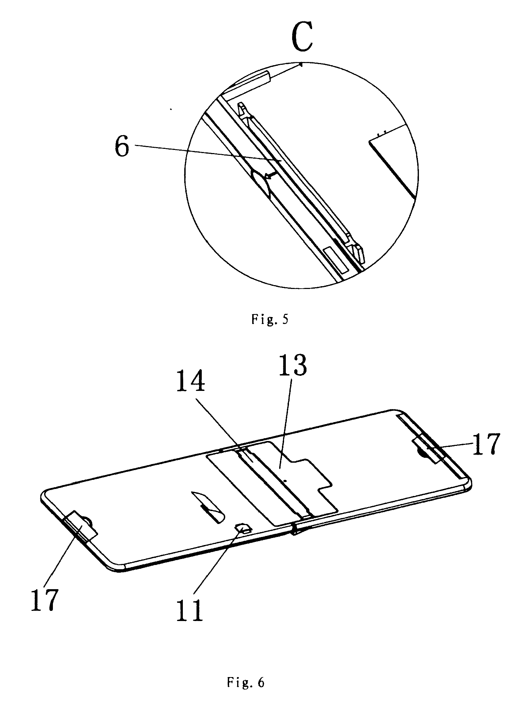

The folding process of the keyboard is reverse to the unfolding process, and the folded keyboard 1 is illustrated in Fig. 5. The upper cover 41 and the lower cover 42 of the protective housing 4 can be closed together and used as a sheath of the keyboard 1 after the keyboard is folded.

Neither of parts A and B of the keyboard in this embodiment contains the encoding and decoding circuit of the keyboard, and only the thin film lines that connect the keys are available. The thin film lines of parts A and B are connected to the circuit board in the lower cover of the protective housing through the back of part B, thereby completing the keyboard functions.

Not only is the protective housing used as the sheath, but also its upper cover 41 can be extended as an LCD screen and its lower cover 42 can be extended as a host of a portable mobile device. The whole protective housing can serve as a "dock" of mobile communications and mobile calculations.

The keyboard structure enables the full character keyboard having standard keycaps to be folded. When being unfolded, the keyboard can be fixed, and used not only on the table, but also on the lap, thereby bringing convenience to the user's operation. The keyboard of the structure is a thin-type keyboard, and the overall thickness of the keyboard after being folded is small, which facilitates the carriage.

## Claims

1. A novel folding keyboard structure, which has a keyboard, **characterized in that**, the keyboard is divided into two parts A and B hinged to each other; the novel folding keyboard structure further comprises a protective housing having an inner side thereof being provided with a slide groove, and a side of the keyboard being provided with a keyboard slide groove matched with the slide groove in which the keyboard is embedded; the protective housing has a size slightly larger than part B, and part B has an area not less than part A; a full size keyboard is formed by unfolding parts A and B and is slidable appropriately in the protective housing; when sliding to a fixed point, the keyboard is fixed in the protective housing by means of the matching between a stop pin groove of the protective housing and a stop pin provided on the back of the keyboard.

2. The novel folding keyboard structure according to claim 1, **characterized in that**, a bent side of part A of the keyboard is provided with a protective sliding cover composed of a sliding cover and a fixed cover hinged to each other, wherein the fixed cover is connected to an bottom surface of part B of the keyboard, and the width of the fixed cover is equal to a sum of the thicknesses of parts A and B of the keyboard; the sliding cover is embedded in a groove on the outer side of part A of the keyboard, and is slidable up and down along the groove; the groove is further provided with a small groove whose bottom is mounted with a elastic spring; the top of the sliding cover is provided with a baffle disposed in the small groove; and when the keyboard is in a folded state, the baffle abuts against the elastic spring and the elastic spring is in a compressed state.

3. The novel folding keyboard structure according to claim 1, **characterized in that**, the length of a keyboard slide groove on part A of the keyboard is less than that of the side of part A, and the keyboard slide groove is communicated with a keyboard slide groove of part B.

4. The novel folding keyboard structure according to claim 1, **characterized in that**, the protective housing is composed of an upper cover and a lower cover hinged to each other, the keyboard is disposed in the protective housing by being folded, and the outer side of the upper cover is provided with a support leg.

5. The novel folding keyboard structure according to claim 1, **characterized in that**, both ends of the keyboard are provided with balance legs, respectively.

6. The novel folding keyboard structure according to claim 1, **characterized in that**, parts A and B of the keyboard contain only thin film lines that connect keys, and the thin film lines are connected to a circuit board in the lower cover of the protective housing.
